# EUROPEAN PATENT SPECIFICATION

(11) **EP 3 874 232 B1**
(45) Date of publication and mention of the grant of the patent: **18.05.2022**
(21) Application number: 19835593.5
(22) Date of filing: 13.12.2019
(51) Int. Cl.: G01C 25/00, G06F 3/01, G02B 27/01, G06F 3/033, A63B 23/04, G06F 3/0346

(54) **COMPENSATING DRIFT OF A SENSOR SYSTEM FOR MEASURING A MOTION DIRECTION OF A USER DURING USAGE OF A VR SYSTEM**
DRIFTKOMPENSATION EINES SENSORSYSTEMS ZUM MESSEN EINER BEWEGUNGSRICHTUNG EINES ANWENDERS WÄHREND DER VERWENDUNG EINES VR-SYSTEMS
COMPENSATION DE DÉRIVE D'UN SYSTÈME DE CAPTEUR POUR MESURER UNE DIRECTION DE MOUVEMENT D'UN UTILISATEUR PENDANT L'UTILISATION D'UN SYSTÈME DE RV

(30) Priority: 13.12.2018 AT 602372018
(43) Date of publication of application: 08.09.2021
(73) Proprietor: CYBERSHOES GMBH, 1180 Vienna (AT)
(72) Inventor: BIEGLMAYER, Michael, 1180 Vienna (AT)
(74) Representative: Herre, Peter
(86) International application number: PCT/AT2019/060438
(87) International publication number: WO 2020/118343

(56) References cited:
- US-A1- 2003 023 192
- US-A1- 2016 343 167
- US-A1- 2018 178 123
- PARK CHANHO ET AL: "Walking-in-Place for VR Navigation Independent of Gaze Direction Using a Waist-Worn Inertial Measurement Unit", 2018 IEEE INTERNATIONAL SYMPOSIUM ON MIXED AND AUGMENTED REALITY ADJUNCT (ISMAR-ADJUNCT), IEEE, 16 October 2018 (2018-10-16), pages 254-257, XP033542867, DOI: 10.1109/ISMAR-ADJUNCT.2018.00079 [retrieved on 2019-04-25]

## Description

### FIELD OF INVENTION

The invention concerns the field of virtual reality (VR) systems, in particular determining a motion direction of a user during usage of a VR system.

### TECHNICAL BACKGROUND

In a VR system, the task is to determine the desired motion direction of a user in virtual reality by determining the direction of walking or running movements of the user in reality. For this purpose, the user may wear special shoes or foot covers (hereinafter referred to as "Cybershoes") equipped with suitable sensors. Acceleration sensors and gyroscopes may be used in the Cybershoes to determine the motion direction of the Cybershoes during walking or running movements.

Thus, the position of the Cybershoes can be determined in principle at any time. However, there is the problem of a drift of the calculated values with regard to the measured walking or running direction of the user compared to the actually desired walking or running direction of the user. Both acceleration sensors and gyroscopes are relative sensors that must be calibrated to a setpoint from time to time. If the drift is not compensated, the motion direction (actual value) measured by the VR system deviates more and more from the motion direction (setpoint value) expected by the user.

A magnetometer could be used for drift compensation of the sensors. The disadvantage of using a magnetometer to compensate for sensor drift is that the magnetometer does not work near reinforced-concrete floors because the earth's magnetic field is shielded from them.

US 2003/023192 A1 discloses a self contained sensor apparatus generating a signal that corresponds to at least two of the three orientational aspects of yaw, pitch and roll of a human-scale body, relative to an external reference frame. A rate sensor generates first sensor signals that correspond to rotational accelerations or rates of the body about certain body axes. The rate sensor is mounted to the body. Coupled to the rate sensor is a signal processor for generating orientation signals relative to the external reference frame that correspond to the angular rate or acceleration signals. The first sensor signals are impervious to interference from electromagnetic, acoustic, optical and mechanical sources. An integrator integrates the rate signal over time. A drift compensator is coupled to the rate sensors and the integrator. The drift compensator may include a gravitational tilt sensor or a magnetic field sensor or both. A verifier periodically measures the orientation of the body by a means different from the drift sensitive sate sensors.

US 2018/178123 A1 discloses the calibration of a virtual direction in the VR system to a real direction as measured by motion sensors. The calibration is not performed during use of the VR system. While the system comprises sensors for measuring a motion direction, there is no drift compensation disclosed on the basis of the measured viewing direction.

Park Chanho et al.: "Walking-in-Place for VR Navigation Independent of Gaze Direction Using a Waist-Worn Inertial Measurement Unit", 2018 IEEE International Symposium on mixed and augmented reality adjunct, 16 October 2018, pages 254-257, XP033542867, discloses a VR system with sensors for measuring a viewing direction and sensors for measuring a motion direction. The drift in the orientation data is calibrated with a separate magnetometer filter while the viewing direction and the motion direction are aligned when they are indicative of the same direction.

US 2016/343167 A1 is directed to the alignment of a VR headset with respect to a platform on which it is employed.

### SUMMARY OF THE INVENTION

It is a task of the present invention to iteratively compensate drift of a sensor system for measuring a motion direction of a user during usage of a VR system without having to resort to complex sensor technology or manual intervention. The motion direction corresponds to a desired walking or running movement of the user in virtual reality, into which the user wants to move in a virtual space by means of walking or running movements executed in reality.

The sensor system for determining the motion direction of a user preferably comprises one or more acceleration sensors and gyroscopes arranged in a shoe or foot covers (hereinafter referred to as "Cybershoe"). If the user wears a Cybershoe on at least one of his feet, the desired walking or running direction of the user can be measured, which is referred to as the motion direction. The advantages of Cybershoes are that a forward and/or backward movement in the virtual space can be triggered directly by the user by moving his feet forward and/or backward. Alternatively, sensor systems that deviate from this setup may also be used as long as they measure the walking or running movements of the user. They are preferably arranged on a foot or leg of the user.

The drift of the sensor system for measuring the motion direction of the user during usage of the VR system is compensated by the direction of view of the user. A user usually looks in the direction in which he wants to move, so that the actual motion direction (setpoint value) expected by the user can be determined from the current viewing direction and compared with the measured motion direction (actual value). A drift compensation value can be calculated from the difference between the setpoint value and the actual value, which is taken into account in subsequent measurements of the motion direction in order to suitably compensate for the drift occurring in the sensor system.

According to the invention, the task of the present invention is solved by a method for iteratively compensating drift of a sensor system for measuring a motion direction of a user during usage of a VR system. The VR system provides access to a sensor system for measuring the viewing direction of the user and to the sensor system for measuring the motion direction of the user. The method comprises the following steps:
- receiving a measured viewing direction of the user from a sensor system for measuring an angular position indicative of the user's head orientation in the user's transverse plane at a measurement time,
- receiving a measured motion direction of the user from a sensor system for measuring an angular position indicative of a direction of the user's walking or running movements in the user's transverse plane at the same measurement time, and
- calculating a drift compensation from the difference between the measured viewing direction of the user and the measured motion direction of the user,
- such that a drift compensated motion direction of the user can be determined by adding the calculated drift compensation to a subsequently measured motion direction of the user,
- wherein the drift compensation is only calculated provided that the viewing direction of the user at the measurement time does not deviate from a previously determined motion direction of the user by more than a viewing angle threshold.

A drift compensated motion direction of the user can be determined by adding the calculated drift compensation to a currently measured motion direction of the user.

The invention also relates to a computer program product with instructions stored thereon which, when executed by one or more processors, cause the one or more processors to perform the method in accordance with the invention.

The invention further relates to a device for iteratively compensating drift of a sensor system for measuring a motion direction of a user during usage of a VR system, comprising:
- means for receiving a measured viewing direction of the user from a sensor system for measuring an angular position indicative of the user's head orientation in the user's transverse plane,
- means for receiving a measured motion direction of the user from a sensor system for measuring an angular position indicative of a direction of the user's walking or running movements in the user's transverse plane, and
- one or more processors configured to perform the method in accordance with the invention.

In some embodiments, the means for receiving a measured motion direction include the sensor system for measuring the motion direction. In some embodiments, the means for receiving a measured viewing direction include the sensor system for measuring the viewing direction.

In some embodiments, the device according to the invention includes means for receiving a measured motion velocity of the user, in order to make the calculation of drift compensation dependent on a movement of the user in opposition to the standstill (standing or sitting) of the user.

The device according to the invention may be integrated into a VR system comprising a sensor system for measuring a motion direction of a user and/or a sensor system for measuring a viewing direction of the user.

The device according to the invention may also include only one or more components of a VR system. In some embodiments, the device according to the invention comprises the sensor system for measuring the motion direction of the user.

Tests with users have shown that the precision of drift compensation can be further improved if the alignment of the current viewing direction with the measured motion direction is only carried out if not only the following first condition, but also one or more of the following second and third conditions are taken into account:
1. The current viewing direction of the user does not deviate more than a predetermined angle difference (viewing angle threshold) from a previously or last determined motion direction, preferably taking into account a previously or last calculated drift compensation. If the angle difference between the determined viewing direction and the determined motion direction is less than or equal to the viewing angle threshold, the user is assumed to be looking straight in his motion direction. However, if the angle difference exceeds the viewing angle threshold, there is reason to believe that the relatively large angle difference does not result primarily from a drift of the sensor system for measuring the motion direction, but from the user looking into a direction other than the motion direction.
2. The user performs walking or running movements, i.e. his motion velocity is greater than or equal to a velocity threshold. If the user stands still in virtual reality, there is no movement and no associated motion direction that could be correlated with the viewing direction. The user can look around in all directions so that the measured viewing directions cannot be used for drift compensation.
3. The user performs the walking or running movements in any forward direction. If the user walks backwards or sideways in any direction, it is often impossible for reasons of human anatomy that the viewing direction of the user is the same as his motion direction.

If, in an embodiment, all three of the above conditions for increasing precision are taken into account in the calculation of drift compensation, drift compensation will only be calculated if the user performs walking or running movements in any forward direction and essentially looks into the direction in which he wishes to move. In all other cases, for example at standstill, backwards or sideways movements or when looking in a clearly different direction relative to the measured motion direction, the drift compensation will not be calculated.

The viewing direction of the user can be determined via a sensor system in VR glasses (Head Mounted Display) worn by the user.

Alternatively, the viewing direction can be detected by an inertial measurement system (IMU) attached to the VR glasses. The IMU can include a magnetometer which is moved with the VR glasses. Since the magnetometer sits at the level of the VR glasses and is not in the immediate vicinity of ground structures that could shield the earth's magnetic field, such as a reinforced-concrete floor, it can provide sufficiently reliable directional data for measuring the viewing direction.

In other embodiments, the viewing direction can be determined based on directional data of a hand controller.

The motion direction and the viewing direction are measured in a reference plane determined by the respective sensor system or the user, for example in a transversal plane of the user or in the horizontal plane. The motion direction and the viewing direction each represent an angular position within the reference plane, which can be measured and calculated in degrees. The zero point (angle 0°) of motion direction and viewing direction is preferably the straight forward direction.

In some embodiments, the previously determined motion direction of the user is a motion direction in which the drift compensation calculated at that time has already been taken into account. In some embodiments, the previously determined motion direction is the last determined motion direction of the user, preferably taking into account the last calculated drift compensation.

In some embodiments of the invention, the viewing angle threshold corresponds to an angle between 5° and 45°; 20° is preferred. The viewing direction and the motion direction is preferably measured in a transversal plane of the user.

Preferably, the method further comprises receiving a measured motion velocity of the user from a sensor system for measuring a motion velocity, wherein the drift compensation is only calculated provided that the measured motion velocity of the user is greater than or equal to a velocity threshold in the forward direction.

In some embodiments of the invention, the forward velocity threshold is between 0 and 1 m/s; values between 0 and 0,1 m/s are preferred.

Preferably, the drift compensation is only calculated provided that the measured motion direction of the user's foot or leg corresponds to a forward movement which is to be distinguished from a backward movement, lateral movement and a standstill of the user in virtual space.

Preferably, the method in accordance with the invention is executed iteratively within the compensation time interval. Calculating the drift compensation may include calculating an average from the individual drift compensation values calculated in the iterations within the compensation time interval. This measure further increases the precision of the calculated drift compensation.

A compensation time interval can have a duration in the range between 50 ms and 10 min; 30 s or 1 min are preferred.

In some embodiments, when averaging the drift compensation values calculated in the respective iteration, those values are not taken into account which do not fulfill one or more of the three conditions listed above for a more precise calculation of drift compensation.

In some embodiments of the invention, drift compensation is not calculated unless one or more of the second and third conditions, besides the mandatory first condition, for a more precise calculation of drift compensation as listed above are met. Preferably, the iterative measurements within the compensation time interval are not started if the conditions are not met. In some embodiments, the conditions are checked for each iteratively determined drift compensation value.

In some embodiments, the calculation of drift compensation, be it an individually calculated drift compensation value or an averaged value from a series of individual measurements within the compensation time interval, is performed once or sporadically. In other embodiments, the drift compensation is recalculated at regular intervals. Preferably, the drift compensation is calculated continuously; i.e. after a compensation time interval has elapsed, the method in accordance with the invention is invoked again for a recalculation of the drift compensation in a further compensation time interval.

Preferably, the method in accordance with the invention comprises calculating a current drift compensated motion direction by adding the last calculated drift compensation to a currently measured motion direction of the user.

Preferably, the device in accordance with the invention further comprises means for receiving a second motion direction of the user from a second sensor system for measuring a second motion direction of the user. The second sensor system is preferably also located on one foot or leg of the user, so that the movements of both feet or legs of the user can be measured independently from each other. The drift compensation is calculated independently for each sensor system.

The drift compensated motion direction of the user is preferably calculated by averaging the respective drift compensated motion directions resulting from the two sensor systems. First, a second drift compensation for the second sensor system is calculated according to the method of the invention. A current drift compensated second motion direction is calculated by adding the calculated second drift compensation to a currently measured second motion direction of the user.

In some embodiments with two sensor systems for measuring a motion direction of the user, a further condition for increasing the precision of the calculation may be applied: A drift compensation value is only calculated at those points in time for the sensor system detecting the movements of the swing leg with active walking or running movement, while the sensor system detecting the movements of the presently standing leg without active walking or running movement does not account for calculating a respective value for drift compensation. In other embodiments, the calculated drift compensations of the respective sensor system are weighted accordingly, where the sensor system representing the active walking movement may be given a higher weight.

Preferably, the method according to the invention also includes an initial calibration or a later reset of the calculated drift compensation which takes place after having aligned, by user request, the viewing direction of the user with the motion direction of the user to a defined direction in order to calibrate the motion direction with the viewing direction.

In some embodiments of the invention, the user specifies an initial calibration of the viewing direction and the motion direction before or at the beginning of the use of the VR system, which serves as the basis for the drift compensation according to the invention. In those embodiments, the drift compensation of the initial calibration is added to each measurement of the motion direction.

In some embodiments, the initial calibration is performed at the start of an application in the VR system or during the user's first steps in a defined direction, where the user is requested to look in the defined direction so that the actual viewing and motion directions match. A preferred defined direction is the straight forward direction.

### BRIEF DESCRIPTION OF THE DRAWINGS

Further advantageous embodiments of the inventive method and the inventive device are explained in more detail in the following figures:
Figure 1 shows a perspective view of a VR system in which the inventive method of determining a motion direction of a user may be implemented;
Figure 2 shows the problem underlying the invention in the form of an angular difference between the viewing direction and the measured motion direction, which results from the actual angular difference between the motion direction and the viewing direction plus the drift of the measured motion direction; and
Figure 3 shows the steps of the inventive method according to a preferred example embodiment of the invention.

### DETAILED DESCRIPTION OF THE EXAMPLE EMBODIMENTS

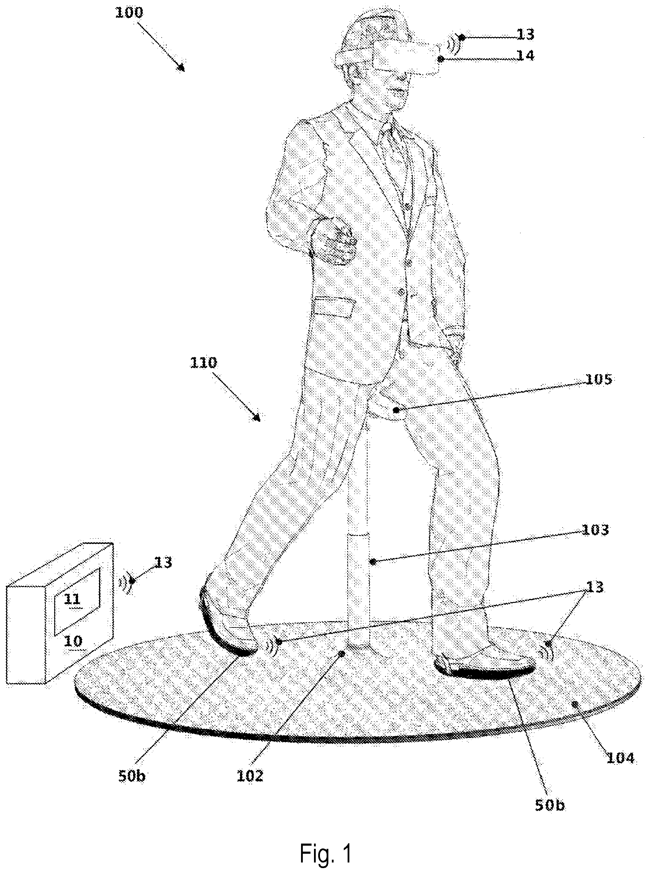

Figure 1 shows a perspective view of a VR system 100 in operating mode during use by a user who has assumed a slightly elevated sitting position on a seat element 105 of a seat 110 of VR system 100 that allows the legs to be moved. VR system 100 also includes a tread surface 104 on the ground, Cybershoes formed by sandals 50b, and a central control means 10 for controlling a display means indicating a virtual space. The display means can be implemented by 3D glasses 14 which comprises a sensor system for measuring a viewing direction of the user.

VR system 100 may further comprise a central control means 10 implemented by a computer or a game console, the central control means 10 comprising an input unit 11 as shown in Figure 1 in simplified form. The method in accordance with the invention may be carried out in the central control means 10. The input unit 11 may, for example, be implemented by a touch display, a mouse, at least one joystick, at least one controller and/or a keyboard. The central control means 10 is arranged at VR system 100 externally to a display means displaying a virtual space and to the Cybershoes. However, it is also possible that the central control means 10 is implemented in at least one of the Cybershoes and/or in the display means. The display means is preferably implemented as 3D glasses 14.

Non-shown sensors of a sensor system are arranged in sandals 50b for measuring a motion direction of the user, wherein signals from the sensors are transmitted to central control means 10 via a radio network 13 by means of non-shown microcontrollers arranged in sandals 50b. The central control means 10 converts the received signals into a virtual space and changes a display in 3D glasses 14 accordingly. 3D glasses 14 and central control means 10 are connected via the radio network 13 for communication.

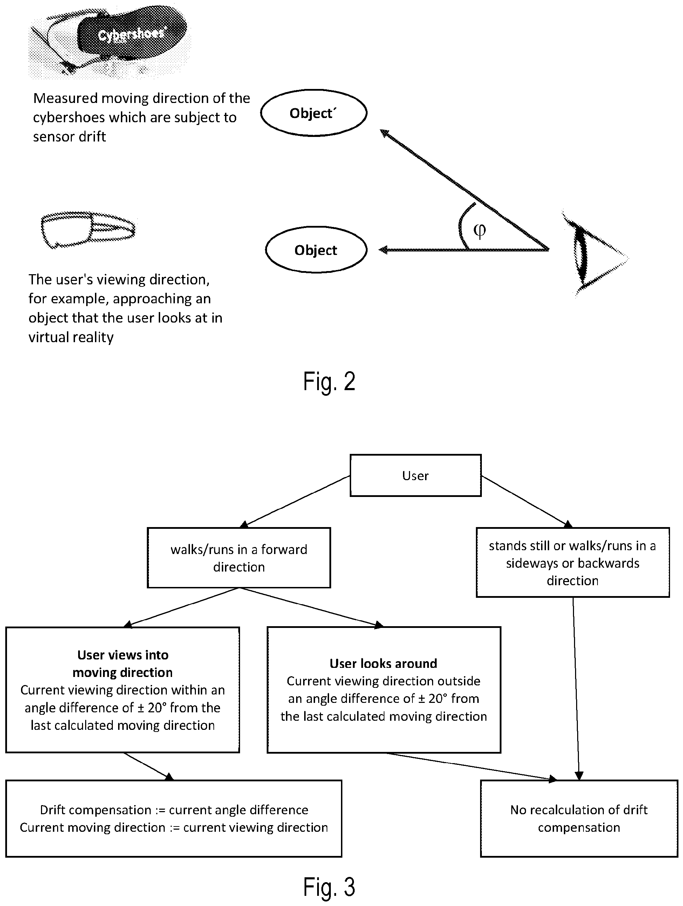

Fig. 2 shows the problem underlying the invention. The viewing direction determined by the sensor system for measuring the viewing direction of the user and the motion direction determined by the sensor system for measuring the motion direction of the user will show an angular difference due to the drift of the sensors even if the user is looking exactly in the same direction in which he is moving. According to some embodiments of the invention, the angular difference is measured at those points in time at which it can be assumed that the user is looking in the direction in which he is moving, so that the calculated angular difference for drift compensation can be taken into account in subsequent measurements of the motion direction.

Fig. 3 shows a preferred example embodiment of the invention, according to which the conditions for improving the precision of drift compensation are checked, so that the calculation of drift compensation is performed only at those times when it is highly likely that the user is looking in the direction in which he is moving. The drift compensation is calculated from the angle difference between the viewing direction and the motion direction; however, this calculation leads to errors if the viewing direction and the motion direction are decoupled from each other and do not coincide.

The first step is to check whether the user is actually walking or running in any forward direction. It can only be assumed with a significantly high probability that the user looks in the motion direction when the user is moving and moves forward. When standing still (e.g. standing or sitting without moving the legs), when moving sideways or backwards at any angle, it is not guaranteed, if not impossible, that the user looks in the direction in which he is moving. For this reason, such motion states of the user are not taken into account in the calculation of drift compensation.

If the user moves in a forward direction, it is nevertheless possible that the user will look around in any direction. This state can be checked via a calculated angle difference between the current viewing direction and the last determined motion direction, preferably taking into account the last calculated drift compensation. If the calculated angle difference is greater than a viewing angle threshold, e.g. 20°, it can be assumed that the user is currently looking around, so that this case also does not contribute to the calculation of the drift compensation.

A further criterion for evaluating whether the user is looking in the direction in which he is moving may be the motion velocity. With increasing motion velocity, the probability increases that the user looks in the direction in which he is moving.

The invention also includes all components mentioned in the example embodiments which are required for the realization of a respective device for calculating a drift compensation or a correspondingly equipped VR system. The distribution of tasks between the individual components of the VR system described in the aforementioned embodiments is to be understood as an example. Other divisions between the components of the VR system are also conceivable, which realize the described characteristics of the invention in equivalent form.

The details contained in the above description of embodiments should not be understood as a limitation of the scope of protection of the invention, but as an exemplary representation of some of its embodiments. Many variants are possible and immediately obvious to the specialist. Therefore, the scope of the invention should not be determined by the example embodiments presented, but by the attached claims and their legal equivalents.

## Claims

1. A method for iteratively compensating drift of a sensor system for measuring a motion direction of a user during usage of a VR system (100), the method comprising:
receiving a measured viewing direction of the user from a sensor system for measuring an angular position indicative of the user's head orientation in the user's transverse plane at a measurement time;
receiving a measured motion direction of the user from a sensor system for measuring an angular position indicative of a direction of the user's walking or running movements in the user's transverse plane at the same measurement time; and
calculating a drift compensation from the difference between the measured viewing direction of the user and the measured motion direction of the user,
such that a drift compensated motion direction of the user can be determined by adding the calculated drift compensation to a subsequently measured motion direction of the user;
wherein the drift compensation is only calculated provided that the viewing direction of the user at the measurement time does not deviate from a previously determined motion direction of the user by more than a viewing angle threshold.

2. The method according to claim 1, further comprising:
receiving a measured motion velocity of the user from a sensor system for measuring a motion velocity;
wherein the drift compensation is only calculated provided that the measured motion velocity of the user is greater than or equal to a velocity threshold.

3. The method according to claim 1 or claim 2, wherein the drift compensation is only calculated provided that the measured motion direction of the user is indicative of the user's walking or running movements in a forward direction in the user's transverse plane.

4. The method according to any one of claims 1-3, executed iteratively within a compensation time interval, wherein calculating the drift compensation comprises averaging over the values of drift compensation calculated in the iterations within the compensation time interval.

5. The method according to any one of claims 1-4, further comprising:
calculating a current drift compensated motion direction by adding the last calculated drift compensation to a currently measured motion direction of the user.

6. The method according to claim 5, further comprising:
receiving a measured second motion direction of the user from a second sensor system for measuring a second motion direction at the same measurement time;
calculating a second drift compensation for the second sensor system;
calculating a current drift compensated second motion direction by adding the calculated second drift compensation to a currently measured second motion direction of the user; and
calculating a current drift compensated average motion direction by averaging the current drift compensated motion direction and the current drift compensated second motion direction.

7. The method according to any one of claims 1-6, further comprising:
resetting the calculated drift compensation after having aligned, by user request, the viewing direction of the user with the motion direction of the user to a defined direction in order to calibrate the motion direction with the viewing direction.

8. The method according to any one of claims 1-7, wherein receiving a measured viewing direction of the user comprises:
measuring an angular position indicative of an orientation of VR glasses (14) in the user's transverse plane, wherein the VR glasses (14) are worn by the user.

9. The method according to any one of claims 1-8, wherein receiving a measured motion direction of the user comprises:
measuring an angular position indicative of an orientation of one or more sensors in the user's transverse plane, wherein the one or more sensors are arranged on a user's foot or leg.

10. A computer program product with instructions stored thereon which, when executed by one or more processors, cause the one or more processors to perform the method according to any one of claims 1-9.

11. A device (10) for iteratively compensating drift of a sensor system for measuring a motion direction of a user during usage of a VR system (100), the device comprising:
means for receiving a measured viewing direction of the user from a sensor system for measuring an angular position indicative of the user's head orientation in the user's transverse plane;
means for receiving a measured motion direction of the user from a sensor system for measuring an angular position indicative of a direction of the user's walking or running movements in the user's transverse plane; and
one or more processors configured to perform the method according to any one of claims 1-9.

## Patentansprüche

1. Verfahren zur iterativen Driftkompensation eines Sensorsystems zum Messen einer Bewegungsrichtung eines Anwenders während der Verwendung eines VR-Systems (100), das Verfahren umfassend:
Empfangen einer gemessenen Blickrichtung des Anwenders von einem Sensorsystem zum Messen einer Winkelposition, die die Kopfausrichtung des Anwenders in der Transversalebene des Anwenders zu einem Messzeitpunkt angibt;
Empfangen einer gemessenen Bewegungsrichtung des Anwenders von einem Sensorsystem zum Messen einer Winkelposition, die eine Richtung der Geh- oder Laufbewegungen des Anwenders in der Transversalebene des Anwenders zum gleichen Messzeitpunkt angibt; und
Berechnen einer Driftkompensation aus der Differenz zwischen der gemessenen Blickrichtung des Anwenders und der gemessenen Bewegungsrichtung des Anwenders,
so dass eine driftkompensierte Bewegungsrichtung des Anwenders bestimmt werden kann, indem die berechnete Driftkompensation zu einer nachfolgend gemessenen Bewegungsrichtung des Anwenders addiert wird;
wobei die Driftkompensation nur unter der Voraussetzung berechnet wird, dass die Blickrichtung des Anwenders zum Messzeitpunkt nicht um mehr als einen Blickwinkelschwellwert von einer zuvor ermittelten Bewegungsrichtung des Anwenders abweicht.

2. Verfahren nach Anspruch 1, ferner umfassend:
Empfangen einer gemessenen Bewegungsgeschwindigkeit des Anwenders von einem Sensorsystem zum Messen einer Bewegungsgeschwindigkeit;
wobei die Driftkompensation nur unter der Voraussetzung berechnet wird, dass die gemessene Bewegungsgeschwindigkeit des Anwenders größer oder gleich einem Geschwindigkeitsschwellwert ist.

3. Verfahren nach Anspruch 1 oder Anspruch 2, wobei die Driftkompensation nur unter der Voraussetzung berechnet wird, dass die gemessene Bewegungsrichtung des Anwenders die Geh- oder Laufbewegungen des Anwenders in einer Vorwärtsrichtung in der Transversalebene des Anwenders angibt.

4. Verfahren nach einem der Ansprüche 1-3, das iterativ innerhalb eines Kompensationszeitintervalls ausgeführt wird, wobei das Berechnen der Driftkompensation ein Mitteln über die in den Iterationen innerhalb des Kompensationszeitintervalls berechneten Werte der Driftkompensation umfasst.

5. Verfahren nach einem der Ansprüche 1-4, ferner umfassend:
Berechnen einer aktuellen driftkompensierten Bewegungsrichtung durch Addieren der zuletzt berechneten Driftkompensation zu einer aktuell gemessenen Bewegungsrichtung des Anwenders.

6. Verfahren nach Anspruch 5, ferner umfassend:
Empfangen einer gemessenen zweiten Bewegungsrichtung des Anwenders von einem zweiten Sensorsystem zum Messen einer zweiten Bewegungsrichtung zum gleichen Messzeitpunkt;
Berechnen einer zweiten Driftkompensation für das zweite Sensorsystem;
Berechnen einer aktuellen driftkompensierten zweiten Bewegungsrichtung durch Addieren der berechneten zweiten Driftkompensation zu einer aktuell gemessenen zweiten Bewegungsrichtung des Anwenders; und
Berechnen einer aktuellen driftkompensierten mittleren Bewegungsrichtung durch Mitteln der aktuellen driftkompensierten Bewegungsrichtung und der aktuellen driftkompensierten zweiten Bewegungsrichtung.

7. Verfahren nach einem der Ansprüche 1-6, ferner umfassend:
Zurücksetzen der berechneten Driftkompensation, nachdem auf Anwenderanforderung die Blickrichtung des Anwenders mit der Bewegungsrichtung des Anwenders auf eine definierte Richtung ausgerichtet wurde, um die Bewegungsrichtung mit der Blickrichtung zu kalibrieren.

8. Verfahren nach einem der Ansprüche 1-7, wobei das Empfangen einer gemessenen Blickrichtung des Anwenders umfasst:
Messen einer Winkelposition, die eine Ausrichtung einer VR-Brille (14) in der Transversalebene des Anwenders angibt, wobei die VR-Brille (14) von dem Anwender getragen wird.

9. Verfahren nach einem der Ansprüche 1-8, wobei das Empfangen einer gemessenen Bewegungsrichtung des Anwenders umfasst:
Messen einer Winkelposition, die eine Ausrichtung eines oder mehrerer Sensoren in der Transversalebene des Anwenders angibt, wobei der eine oder die mehreren Sensoren an einem Fuß oder Bein des Anwenders angeordnet sind.

10. Computerprogrammprodukt mit darauf gespeicherten Anweisungen, die, wenn sie von einem oder mehreren Prozessoren ausgeführt werden, den einen oder die mehreren Prozessoren veranlassen, das Verfahren nach einem der Ansprüche 1-9 auszuführen.

11. Vorrichtung (10) zur iterativen Driftkompensation eines Sensorsystems zum Messen einer Bewegungsrichtung eines Anwenders während der Verwendung eines VR-Systems (100), wobei die Vorrichtung umfasst:
Mittel zum Empfangen einer gemessenen Blickrichtung des Anwenders von einem Sensorsystem zum Messen einer Winkelposition, die die Kopfausrichtung des Anwenders in der Transversalebene des Anwenders angibt;
Mittel zum Empfangen einer gemessenen Bewegungsrichtung des Anwenders von einem Sensorsystem zum Messen einer Winkelposition, die eine Richtung der Geh- oder Laufbewegungen des Anwenders in der Transversalebene des Anwenders angibt; und
einen oder mehrere Prozessoren, die dazu eingerichtet sind, das Verfahren nach einem der Ansprüche 1-9 auszuführen.

## Revendications

1. Procédé pour compenser de manière itérative la dérive d'un système de capteur pour mesurer une direction de mouvement d'un utilisateur pendant l'utilisation d'un système de réalité virtuelle, RV, (100), le procédé comprenant :
recevoir une direction de visualisation mesurée de l'utilisateur à partir d'un système de capteur pour mesurer une position angulaire indiquant l'orientation de tête de l'utilisateur dans le plan transversal de l'utilisateur à un moment de mesure ;
recevoir une direction de mouvement mesurée de l'utilisateur à partir d'un système de capteur pour mesurer une position angulaire indiquant une direction des mouvements de marche ou de course de l'utilisateur dans le plan transversal de l'utilisateur au même moment de mesure ; et
calculer une compensation de dérive à partir de la différence entre la direction de visualisation mesurée de l'utilisateur et la direction de mouvement mesurée de l'utilisateur,
de telle sorte qu'une direction de mouvement à dérive compensée de l'utilisateur peut être déterminée en ajoutant la compensation de dérive calculée à une direction de mouvement mesurée ultérieurement de l'utilisateur ;
dans lequel la compensation de dérive est calculée uniquement si la direction de visualisation de l'utilisateur au moment de mesure ne s'écarte pas d'une direction de mouvement déterminée précédemment de l'utilisateur de plus d'un seuil d'angle de visualisation.

2. Procédé selon la revendication 1, comprenant en outre :
recevoir une vitesse de mouvement mesurée de l'utilisateur à partir d'un système de capteur pour mesurer une vitesse de mouvement ;
dans lequel la compensation de dérive est calculée uniquement si la vitesse de mouvement mesurée de l'utilisateur est supérieure ou égale à un seuil de vitesse.

3. Procédé selon la revendication 1 ou la revendication 2, dans lequel la compensation de dérive est calculée uniquement si la direction de mouvement mesurée de l'utilisateur indique les mouvements de marche ou de course de l'utilisateur dans une direction vers l'avant dans le plan transversal de l'utilisateur.

4. Procédé selon l'une quelconque des revendications 1 à 3, exécuté de manière itérative dans un intervalle de temps de compensation, dans lequel le calcul de la compensation de dérive comprend le calcul d'une moyenne des valeurs de compensation de dérive calculées dans les itérations dans l'intervalle de temps de compensation.

5. Procédé selon l'une quelconque des revendications 1 à 4, comprenant en outre :
calculer une direction de mouvement à dérive compensée actuelle en ajoutant la dernière compensation de dérive calculée à une direction de mouvement actuellement mesurée de l'utilisateur.

6. Procédé selon la revendication 5, comprenant en outre :
recevoir une seconde direction de mouvement mesurée de l'utilisateur à partir d'un second système de capteur pour mesurer une seconde direction de mouvement au même moment de mesure ;
calculer une seconde compensation de dérive pour le second système de capteur ;
calculer une seconde direction de mouvement à dérive compensée actuelle en ajoutant la seconde compensation de dérive calculée à une seconde direction de mouvement actuellement mesurée de l'utilisateur ; et
calculer une direction de mouvement moyenne à dérive compensée actuelle en faisant une moyenne de la direction de mouvement à dérive compensée actuelle et de la seconde direction de mouvement à dérive compensée actuelle.

7. Procédé selon l'une quelconque des revendications 1 à 6, comprenant en outre :
réinitialiser la compensation de dérive calculée après avoir aligné, à la demande de l'utilisateur, la direction de visualisation de l'utilisateur sur la direction de mouvement de l'utilisateur à une direction définie de façon à étalonner la direction de mouvement avec la direction de visualisation.

8. Procédé selon l'une quelconque des revendications 1 à 7, dans lequel la réception d'une direction de visualisation mesurée de l'utilisateur comprend :
mesurer une position angulaire indiquant une orientation de lunettes RV (14) dans le plan transversal de l'utilisateur, dans lequel les lunettes RV (14) sont portées par l'utilisateur.

9. Procédé selon l'une quelconque des revendications 1 à 8, dans lequel la réception d'une direction de mouvement mesurée de l'utilisateur comprend :
mesurer une position angulaire indiquant une orientation d'un ou plusieurs capteurs dans le plan transversal de l'utilisateur, dans lequel le ou les capteurs sont disposés sur un pied ou une jambe de l'utilisateur.

10. Produit programme d'ordinateur avec des instructions stockées sur celui-ci qui, lorsqu'elles sont exécutées par un ou plusieurs processeurs, amènent le ou les processeurs à exécuter le procédé selon l'une quelconque des revendications 1 à 9.

11. Dispositif (10) pour compenser de manière itérative la dérive d'un système de capteur pour mesurer une direction de mouvement d'un utilisateur pendant l'utilisation d'un système de réalité virtuelle, RV, (100), le dispositif comprenant :
des moyens pour recevoir une direction de visualisation mesurée de l'utilisateur à partir d'un système de capteur pour mesurer une position angulaire indiquant l'orientation de tête de l'utilisateur dans le plan transversal de l'utilisateur ;
des moyens pour recevoir une direction de mouvement mesurée de l'utilisateur à partir d'un système de capteur pour mesurer une position angulaire indiquant une direction des mouvements de marche ou de course de l'utilisateur dans le plan transversal de l'utilisateur ; et
un ou plusieurs processeurs configurés pour réaliser le procédé selon l'une quelconque des revendications 1 à 9.
